# EUROPÄISCHE PATENTSCHRIFT

(11) **EP 0 572 748 B1**
(45) Veröffentlichungstag und Bekanntmachung des Hinweises auf die Patenterteilung: **30.10.1996**
(21) Anmeldenummer: 92810421.5
(22) Anmeldetag: 02.06.1992
(51) Int. Cl.: F04B 39/10

(54) **Ringventil für einen Kolbenkompressor**
Annular valve for a piston compressor
Soupape annulaire pour compresseur à piston

(43) Veröffentlichungstag der Anmeldung: 08.12.1993
(73) Patentinhaber: Maschinenfabrik Sulzer-Burckhardt AG, CH-4002 Basel (CH)
(72) Erfinder: Lehmann, Markus, CH-8477 Oberstammheim (CH)
(74) Vertreter: Hammer, Bruno, Dr.

(56) Entgegenhaltungen:
- CH-A- 430 932
- GB-A- 251 472
- GB-A- 679 079
- US-A- 2 000 691
- US-A- 3 536 094
- US-A- 4 729 402

## Beschreibung

Die Erfindung betrifft ein Ringventil gemäss dem Oberbegriff von Anspruch 1.

Unter einem ringförmigen Dichtelement soll sowohl ein Ringkörper, der nur mit einem im Ventilsitz angebrachten Durchbruch oder Ringkanal zusammenwirkt, als auch eine Ringplatte verstanden werden, die mit mehreren konzentrisch im Ventilsitz angebrachten Durchbrüchen oder Ringkanälen zusammenwirkt.

Bei bekannten Ventilen dieser Art mit Ringplatten als Dichtelement dienen die Schraubenfedern nur dazu, das Dichtelement in Schliessstellung zu bringen und zu halten. Zum Führen des Dichtelementes während der Oeffnungs- und der Schliessbewegung wurde das Dichtelement entweder an einem zwischen dem Ventilsitz und dem Fänger angeordneten Distanzring geführt oder zwischen dem Dichtelement und seinem Befestigungsring wurden sogenannte Lenkerarme vorgesehen, die einstückig mit dem Dichtelement und dem Befestigungsring hergestellt sind. Während die zuerstgenannte Ausführungsform wegen der Führung des Dichtelementes am Distanzring nicht reibungsfrei arbeitet und deshalb mit Oel geschmiert werden muss, arbeitet die zweite Ausführungsform zwar reibungsfrei und wird deshalb in Trockenlaufkompressoren verwendet; sie hat jedoch den Nachteil, dass sie wegen der Lenkerarme mehr Platz beansprucht. Ausserdem können sich Betriebsstörungen ergeben, wenn die Lenkerarme brechen.

Aus dem Patent CH 430 932 sowie aus dem Patent GB 679 079 sind weitere Ringventile bekannt, mit einem Verschlussorgan zwischen Ventilsitz und Fänger, wobei eine einzige, zur Ventilachse konzentrisch verlaufende Schraubenfeder auf das Verschlussorgan wirkt. Der grosse Windungsdurchmesser der Schraubenfeder hat eine geringe Stabilität des Verschlussorganes quer zur Bewegungsrichtung zur Folge, woraus eine ungenaue Führung des Verschlussorganes resultiert. Ein weiterer Nachteil der Schraubenfeder ist darin zu sehen, dass die auf das Verschlussorgan bewirkte Kraft nicht gleichmässig über den Umfang des Verschlussorganes verteilt anliegt, so dass das Verschlussorgan nicht gleichmässig auf den Ventilsitz aufschlägt. Beide bekannten Ausführungsformen von Ringventilen weisen daher den Nachteil auf, dass auf Grund der ungenauen Führung des Verschlussorganes während dem Betrieb Abnützungserscheinungen am Verschlussorgan auftreten, und dass eine Führungsvorrichtung erforderlich ist, um das Verschlussorgan zu führen, sei es mit einer Hilfsführung oder mit einer v-förmigen Ausgestaltung des Verschlussorgans. Ein weiterer Nachteil dieser bekannten Ringventile ist darin zu sehen, dass bei einem Bruch der Feder das Ventil vollständig ausfällt. Zudem weist das aus der Patentschrift CH 430 932 bekannte Ringventil den Nachteil auf, dass die Endwindung der Schraubenfeder bearbeitet werden muss, um zwischen der Schraubenfeder und dem Verschlussorgan einen spielfreien Sitz zu erzielen. Somit ist ein Ersetzen des Verschlussorganes relativ aufwendig.

Der Erfindung liegt die Aufgabe zugrunde, Ringventile der eingangs genannten Art dahingehend zu verbessern, dass sie die genannten Nachteile überwinden.

Diese Aufgabe wird erfindungsgemäss gelöst gemäss den Merkmalen von Anspruch 1. Die Unteransprüche 2 bis 8 beziehen sich auf weitere vorteilhafte Ausgestaltungen der Erfindung.

Durch diese konstruktive Gestaltung übernehmen die Schraubenfedern ausser der Schliessfunktion zusätzlich die Führungsfunktion für das Dichtelement, wodurch sich eine reibungsfreie und stabile Führung des Dichtelementes ergibt. Obwohl das neue Ventil keiner Schmierung bedarf, kann es auch in Kompressoren mit Oelschmierung eingesetzt werden. Gegenüber den bekannten Ringventilen in Trockenlaufkompressoren weist das neue Ringventil eine platzsparendere Konstruktion auf und die Gefahr von Betriebsstörungen ist verringert, da kein Brechen von Lenkerarmen mehr auftreten kann.

Einige Ausführungsbeispiele der Erfindung sind in der folgenden Beschreibung anhand der Zeichnung näher erläutert. Es zeigen:
- Fig.1: einen Axialschnitt durch ein Ringplattenventil nach der Erfindung,
- Fig.2: einen Ausschnitt aus Fig.1 im Bereich einer Schraubenfeder, in grösserem Massstab als in Fig.1,
- Fig.3 und Fig.4: je einen der Fig.2 entsprechenden Ausschnitt von zwei abgewandelten Ringplatten und
- Fig.5: einen der Fig.2 entsprechenden Ausschnitt mit einem ringförmigen Dichtelement.

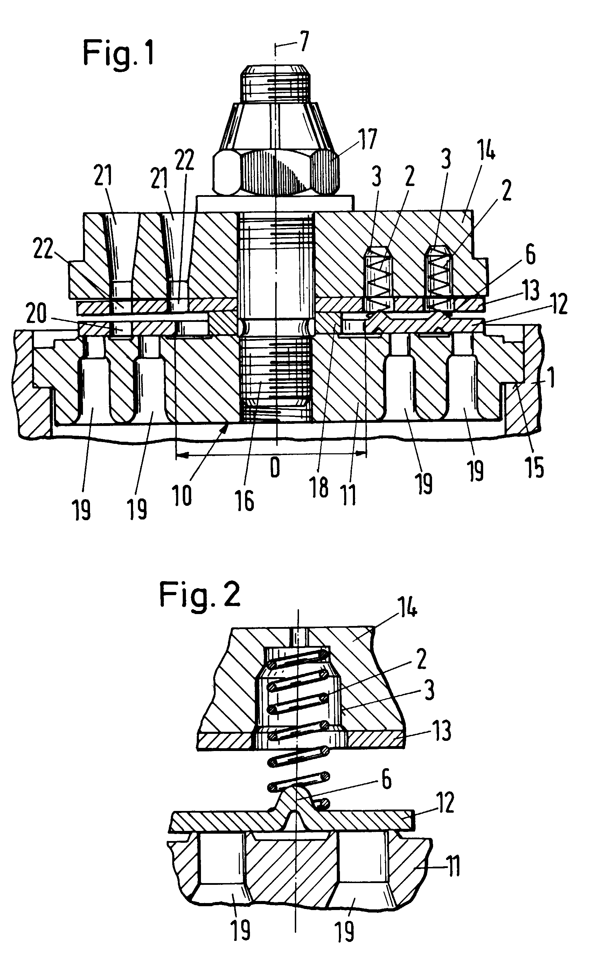

Gemäss Fig.1 ist in einem nicht näher dargestellten Gehäuse 1 eines Kompressors ein Druckventil 10 der Ringplattenbauart angeordnet, das im wesentlichen aus einem plattenförmigen Ventilsitz 11, einem Dichtelement 12 in Form einer Ringplatte, einer Dämpferplatte 13 und einem plattenförmigen Fänger 14 besteht. Der Ventilsitz 11 ruht mit seinem Rand auf einer Schulter 15 im Gehäuse 1 und ist in diesem Gehäuse mittels einer nicht dargestellten Laterne festgehalten, die den Ventilsitz gegen die Schulter 15 presst. Koaxial zur Symmetrieachse 7 des Ventils 10 ist im Ventilsitz 11 ein Schraubenbolzen 16 eingeschraubt, der die Dämpferplatte 13 und den Fänger 14 durchdringt. Mittels einer Mutter 17 sind diese Teile 13 und 14 am Ventilsitz 11 befestigt, wobei zwischen dem Ventilsitz und der Dämpferplatte 13 ein Abstand zur Aufnahme der beweglichen Ringplatte 12 besteht. Ein den Schraubenbolzen 16 umgebender Distanzring 18 zwischen dem Ventilsitz 11 und der Dämpferplatte 13 drückt diese gegen den Fänger 14.

Im Ventilsitz 11 sind auf zwei verschiedenen Radien Durchbrüche 19 vorgesehen, die sich in Umfangsrichtung des Ventilsitzes erstrecken und deren Verlauf an mehreren Stellen durch radiale Stege unterbrochen ist. Zwischen den Durchbrüchen 19 befindet sich in der Ringplatte 12 ein Durchbruch 20, der parallel zu den Durchbrüchen 19 verläuft. Entsprechend den beiden Durchbrüchen 19, sind zur Achse 7 hin versetzt, zwei Durchbrüche 21 im Fänger 14 vorgesehen, die sich ebenfalls in Umfangsrichtung erstrecken und deren Verlauf an mehreren Stellen durch radiale Stege unterbrochen ist. Fluchtend zu den Durchbrüchen 21 sind in der Dämpferplatte 13 Durchbrüche 22 vorhanden. Die Durchbrüche 19, 20, 21 und 22 dienen dem Durchtritt des im Kompressor verdichteten Gases, das sich in Fig.1 unterhalb des Ventilsitzes 11 befindet und unter Abheben der Ringplatte 12 vom Ventilsitz in eine nicht gezeichnete Druckleitung strömt.

Die bewegliche Ringplatte 12, deren Innendurchmesser D wesentlich grösser ist als der Aussendurchmesser des Distanzringes 18, so dass nach dem Abheben der Ringplatte 12 vom Ventilsitz 11 ein ausreichender Strömungsquerschnitt zwischen der Ringplatte 12 und dem Distanzring 18 verbleibt, wird von mehreren, über den Umfang der Ringplatte angeordneten Schraubenfedern 2 gegen den Ventilsitz 11 gepresst, von denen in Fig.1 zwei in radialer Richtung nebeneinanderliegend gezeigt sind. Die Schraubenfedern 2 dienen ausserdem zum Führen der Ringplatte 12. Zu diesem Zweck ist jede Schraubenfeder 2 - wie aus Fig.2 erkennbar ist - mit ihrem oberen Ende in einer Sackbohrung 3 des Fängers 14 befestigt. Das in Fig.2 obere Ende der Sackbohrung 3 ist dem Windungsdurchmesser der Schraubenfeder 2 so angepasst, dass deren oberste Windung sich beim Einsetzen in die Bohrung darin festklemmt. Der übrige Teil der Sackbohrung 3 ist im Durchmesser etwas grösser bemessen, so dass keine Berührung zwischen den übrigen Federwindungen und der Bohrung 3 stattfindet. Das andere, in Fig.2 untere Ende der Schraubenfeder 2 umschliesst einen noppenartigen Vorsprung 6, der aus der aus Metall bestehenden Ringplatte 12 durch einen Prägevorgang herausgedrückt worden ist und damit als Führungsmittel für die Schraubenfeder 2 dient, so dass diese sich mit diesem Ende nicht auf der Ringplatte seitlich verschieben kann. Durch die beschriebene Gestaltung der Sackbohrung 3 und der Ringplatte 12 wird eine einwandfreie Führung der beweglichen Ringplatte während des Betriebes des Kompressors erreicht, und zwar unabhängig davon, in welcher Position das Ventil am Kompressor montiert ist. Abweichend von der in Fig.1 und 2 gezeichneten Stellung kann das Ventil 10 auch so montiert sein, dass die Achse 7 des Ventils horizontal liegt.

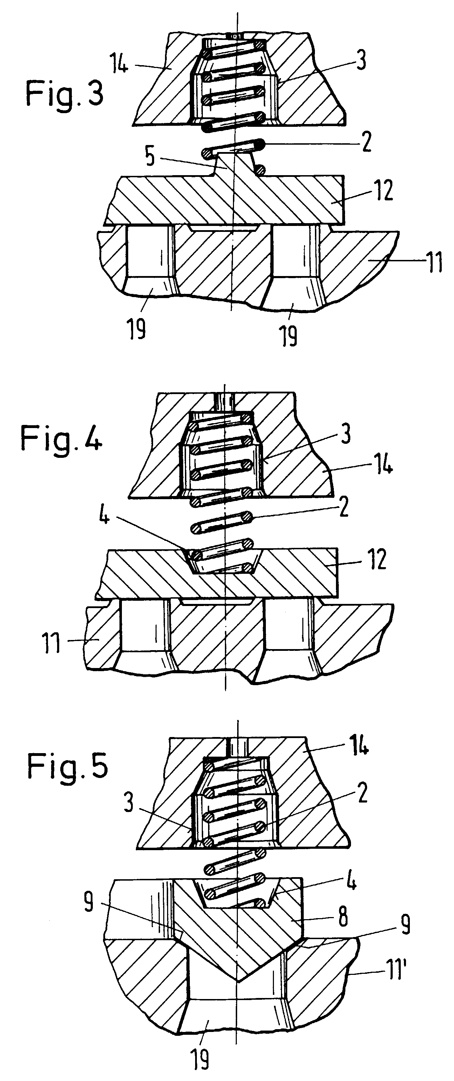

Beim Ausführungsbeispiel gemäss Fig.3 ist das Ringplattenventil 10 gleich aufgebaut, wie zu Fig.1 beschrieben, jedoch besteht die Ringplatte 12 nicht aus Metall, sondern aus Kunststoff. Ein noppenartiger Vorsprung 5 ist in diesem Falle beim Pressen oder Spritzen der Ringplatte 12 angeformt worden. Die Abmessungen des Vorsprungs 5 sind so gewählt, dass das in Fig.3 untere Ende der Schraubenfeder 2 den Vorsprung 5 sicher umgibt, so dass keine Relativbewegung zwischen der Ringplatte 12 und dem Federende eintritt. Da die Ringplatte 12 aus Kunststoff besteht, ist eine Dämpferplatte weggelassen worden.

Beim Ausführungsbeispiel gemäss Fig.4 besteht die Ringplatte 12 wiederum aus Kunststoff, jedoch ist statt eines noppenartigen Vorsprungs eine kegelstumpfähnliche Vertiefung 4 auf der Oberseite der Ringplatte 12 angebracht, die das in Fig.4 untere Ende der Schraubenfeder 2 aufnimmt. Die Vertiefung 4 bildet hier also das Führungsmittel für das Schraubenfederende und damit für die Ringplatte 12.

Beim Ausführungsbeispiel gemäss Fig.5 ist anstelle einer Ringplatte ein aus Kunststoff bestehender Ringkörper 8 als Dichtelement vorgesehen, der im Querschnitt eine fünfeckige, strömungsgünstige Form aufweist. Zwei zueinander unter einem stumpfen Winkel geneigte Konusflächen des Ringkörpers 8 wirken mit zwei entsprechend geneigten Flächen am Ventilsitz 11' zusammen und bilden damit Dichtflächen 9. Auf der in Fig.5 oberen Seite des Dichtkörpers 8 ist - wie in Fig.4 - eine Vertiefung 4 zur Aufnahme des unteren Endes der Schraubenfeder 2 vorgesehen. Im kompletten Ventil können mehrere der Ringkörper 8 konzentrisch zur Achse 7 vorgesehen sein.

Die Erfindung ist mit gleichen Ausführungsformen auch bei den Ventilen im Saugstutzen des Kompressors anwendbar.

## Patentansprüche

1. Ringventil (10) für einen Kolbenkompressor, mit einem Ventilsitz (11), einem an diesem mit Abstand befestigten Fänger (14) und mindestens einem zwischen dem Ventilsitz (11) und dem Fänger (14) bewegbaren, ringförmigen Dichtelement (12), wobei eine zwischen dem Fänger (14) und dem Dichtelement (12) wirkende Schraubenfeder (2) das Dichtelement (12) in Schliessrichtung zum Ventilsitz (11) bewegt, und wobei die Schraubenfeder (2) an ihrem einen Ende im Fänger (14) befestigt ist,
dadurch gekennzeichnet, dass mindestens drei Schraubenfedern (2) über den Umfang des Dichtelementes (12) verteilt angeordnet sind, und dass das Dichtelement (12) auf der dem Fänger (14) zugewandten Seite Vertiefungen (4) oder noppenartige Vorsprünge (5,6) aufweist, welche mit dem anderen Ende der Schraubenfedern (2) im Eingriff sind, so dass sich die Schraubenfedern (2) mit diesem Ende auf dem Dichtelement (12) seitlich nicht verschieben können.

2. Ventil nach Anspruch 1, dadurch gekennzeichnet, dass das Dichtelement (12) plattenförmig ausgebildet ist und aus einem Metall besteht.

3. Ventil nach Anspruch 2, dadurch gekennzeichnet, dass die noppenartigen Vorsprünge (5,6) aus der Plattenebene herausgedrückt sind.

4. Ventil nach einem der Ansprüche 1 bis 3, dadurch gekennzeichnet, dass zwischen dem Fänger (14) und dem Dichtelement (12) eine Dämpferplatte (13) angeordnet ist, welche Durchbrüche (22) aufweist.

5. Ventil nach Anspruch 1, dadurch gekennzeichnet, dass das Dichtelement (12) plattenförmig ausgebildet ist und aus einem Kunststoff besteht.

6. Ventil nach einem der Ansprüche 1 bis 5, dadurch gekennzeichnet, dass das Dichtelement (12) die Form einer Ringplatte aufweist.

7. Ventil nach Anspruch 1, dadurch gekennzeichnet, dass das Dichtelement (12) als ein aus Kunststoff bestehender Ringkörper (8) ausgebildet ist.

8. Ventil nach Anspruch 7, dadurch gekennzeichnet, dass die dem Ventilsitz (11') zugewandte Seite des Ringkörpers (8) als zwei zueinander unter einem stumpfen Winkel geneigte Konusflächen ausgebildet ist.

9. Kolbenkompressor mit einem Ventil nach einem der Ansprüche 1 bis 8.

## Claims

1. An annular valve (10) for a piston compressor, having a valve seat (11), an absorber (14) attached at a distance thereto and at least one annular sealing element (12), which can move between the valve seat (11) and the absorber (14), wherein a helical spring (2) acting between the absorber (14) and the sealing element (12) moves the sealing element (12) in the closing direction to the valve seat (11), and wherein the helical spring (2) is attached at its one end in the absorber (14),
**characterised in that** at least three helical springs (2) are provided distributed over the periphery of the sealing element (12),
**and in that** on the side faced towards the absorber (14) the sealing element (12) comprises depressions (4) or knob-shaped projections (5, 6), which are in engagement with the other end of the helical springs (2), so that the helical springs (2) can not be laterally displaced with this end on the sealing element (12).

2. A valve according to Claim 1,
**characterised in that** the sealing element (12) has a plate-shaped construction and is made of a metal.

3. A valve according to Claim 2,
**characterised in that** the knob-like projections (5, 6) are pressed out of the plane of the plate.

4. A valve according to one of Claims 1 to 3,
**characterised in that** a damping plate (13) comprising openings (22) is disposed between the absorber (14) and the sealing element (12).

5. A valve according to Claim 1,
**characterised in that** the sealing element (12) has a plate-shaped construction and is made of a plastic.

6. A valve according to one of Claims 1 to 5,
**characterised in that** the sealing element (12) takes the form of an annular plate.

7. A valve according to Claim 1,
**characterised in that** the sealing element (12) is constructed as an annular member (8) made of plastics.

8. A valve according to Claim 7,
**characterised in that** the side of the annular member (8) faced towards the valve seat (11') is constructed as two tapered faces inclined towards one another by an obtuse angle.

9. A piston compressor having a valve according to one of Claims 2 to 8.

## Revendications

1. Soupape annulaire (10) destinée à un compresseur à piston, comprenant un siège de soupape (11), un butoir (14) fixé à distance sur ce dernier et au moins un élément annulaire d'étanchéité (12) mobile entre le siège de soupape (11) et le butoir (14), un ressort hélicoïdal (2), qui agit entre le butoir (14) et l'élément d'étanchéité (12), déplaçant l'élément d'étanchéité (12) dans le sens de fermeture vers le siège de soupape (11) et une extrémité du ressort hélicoïdal (12) étant fixée dans le butoir (14),
caractérisée en ce qu'au moins trois ressorts hélicoïdaux (2) sont disposés en étant répartis à la circonférence de l'élément d'étanchéité (12) et en ce que l'élément d'étanchéité (12) comporte sur le côté tourné vers le butoir (14) des cavités (4) ou des protubérances en forme de boutons (5, 6) qui sont en prise avec l'autre extrémité des ressorts hélicoïdaux (2) de manière que cette extrémité des ressorts hélicoïdaux (2) ne puisse pas se déplacer latéralement sur l'élément d'étanchéité (12).

2. Soupape selon la revendication 1, caractérisée en ce que l'élément d'étanchéité (12) est en forme de diaphragme et est en métal.

3. Soupape selon la revendication 2, caractérisée en ce que les protubérances en forme de boutons (5, 6) sont réalisées par repoussage sur le plan du diaphragme.

4. Soupape selon l'une des revendications 1 à 3, caractérisée en ce qu'une plaque d'amortissement (13) qui comporte des passages (22) est disposée entre le butoir (14) et l'élément d'étanchéité (12).

5. Soupape selon la revendication 1, caractérisée en ce que l'élément d'étanchéité (12) est en forme de diaphragme et est en matière plastique.

6. Soupape selon l'une des revendications 1 à 5, caractérisée en ce que l'élément d'étanchéité (12) a la forme d'un diaphragme annulaire.

7. Soupape selon la revendication 1, caractérisée en ce que l'élément d'étanchéité (12) est conformé en corps annulaire (8) en matière plastique.

8. Soupape selon la revendication 7, caractérisée en ce que le côté du corps annulaire (8) qui est tourné vers le siège de soupape (11') est conformé en deux surfaces coniques inscrivant un angle obtus l'une avec l'autre.

9. Compresseur à piston équipé d'une soupape selon l'une des revendications 1 à 8.
